# FASCICULE DE BREVET EUROPEEN

(11) **EP 4 204 726 B1**
(45) Date de publication et mention de la délivrance du brevet: **01.10.2025**
(21) Numéro de dépôt: 21777575.8
(22) Date de dépôt: 30.08.2021
(51) Int. Cl.: F16L 27/107, F16L 27/108, F16L 27/12, F16L 27/02

(54) **RACCORD DE CONDUITE DE FLUIDE POUR MOTEUR-FUSÉE**
FLUIDLEITUNGSVERBINDER FÜR RAKETENMOTOR
FLUID DUCT CONNECTOR FOR ROCKET MOTOR

(30) Priorité: 28.08.2020 FR 2008778
(43) Date de publication de la demande: 05.07.2023
(73) Titulaire: ArianeGroup SAS, 78130 Les Mureaux (FR)
(72) Inventeur: PYRE, Alain, 27207 Vernon Cedex (FR)
(74) Mandataire: Cabinet Beau de Loménie
(86) Numéro de dépôt international: PCT/FR2021/051498
(87) Numéro de publication internationale: WO 2022/043640

(56) Documents cités:
- EP-A1- 3 839 315
- WO-A1-2017/062335
- WO-A1-2020/254100
- FR-A1- 3 090 069
- GB-A- 816 157
- US-A- 3 179 447
- US-A- 3 353 846

## Description

### Domaine Technique

Le présent exposé concerne un raccord de conduite de fluide pour moteur-fusée, un moteur-fusée équipé d'un tel raccord, et un engin spatial équipé d'un tel moteur-fusée.

### Technique antérieure

Les lignes fluides reliant les différents composants d'un moteur-fusée doivent en général autoriser des déplacements selon certains degrés de liberté. Deux types principaux de dispositifs connus permettent de réaliser de telles lignes fluides, à savoir des raccords de conduits de fluide à cardan et des raccords de conduits de fluide à flexible.

Toutefois, les cardans sont généralement coûteux et lourds, tandis que les propriétés mécaniques des flexibles ne sont pas entièrement satisfaisantes. Il existe donc un besoin en ce sens. US 3353846 divulgue un dispositif de retenue à soufflets. Les documents FR3090069A1 et GB816157A divulguent tous deux un raccord flexible pour relier un premier et un deuxième segment d'un conduit au moyen d'un soufflet.

### Exposé de l'invention

La présente invention concerne un raccord flexible pour conduites de fluide reliant des composants d'un moteur-fusée selon la revendication 1.

Dans le présent exposé, les termes tube « rigide » et tube « souple » sont entendues de manière relative. Est considéré comme « rigide » un élément qui possède une rigidité en flexion au moins 10 fois supérieur à celle d'un élément « souple ».

Dans le présent exposé, il est entendu que la coopération par complémentarité de forme s'effectue à travers des formes de coopération prévues sur les éléments de liaison. Les formes de coopération sont configurées pour s'emboiter géométriquement.

Grâce à la coopération par complémentarité de forme des éléments de liaison, le raccord peut être fabriqué avec des tolérances de fabrication relativement importantes, sans forcément nécessiter un usinage très précis. Ce type de coopération peut autoriser par ailleurs une taille relativement réduite des éléments de liaison.

Le raccord selon le présent exposé est ainsi plus facile à fabriquer, moins coûteux et moins lourd que les cardans de l'état de la technique, tout en présentant de biens meilleures performances mécaniques que les flexibles de l'état de la technique. Notamment, les raccords selon le présent exposé offrent une bonne reprise des « effets de fond » en traction dus à la pression qui induisent des contraintes sur les lignes, et donc un comportement mécanique satisfaisant, et ce tant durant les régimes transitoires que les régimes permanents. Par exemple, les efforts repris par le raccord peuvent être des efforts de traction et/ou des efforts de flexion.

Selon l'invention, le raccord flexible s'étend selon un axe, les éléments de liaison étant configurés pour coopérer de manière à autoriser les mouvements tendant à rapprocher les deux portions de tube rigide l'une vers l'autre selon la direction axiale, et à limiter l'écartement entre les deux portions de tube rigide selon la direction axiale à une valeur prédéterminée.

L'axe peut être rectiligne ou courbe. L'axe peut être compris comme la fibre neutre du raccord, par exemple le raccord étant considéré comme un volume géométrique plein. Les éléments de liaison limitent les mouvements relatifs entre les deux portions de tube qui sont les mouvements relatifs transverses à la direction axiale et les mouvements relatifs de rotation autour de la direction axiale.

Selon l'invention, les éléments de liaison coopèrent par l'intermédiaire d'un raccord du type mâle/femelle apte à s'emboîter géométriquement.

Dans cette configuration, la coopération des éléments de liaison est simplifiée et améliorée. De manière générale, la coopération des éléments de liaison (et donc leur interaction) est facilitée.

Dans certains modes de réalisation, les éléments de liaison présentent une forme générale de « U » ou de « V » et sont enchâssés l'un dans l'autre tête-bêche.

Dans le présent exposé, une forme générale de « U » ou de « V » est entendue comme étant la forme d'un élément considéré dans son ensemble, sans s'attacher à des variations mineures et/ou locales.

Dans le présent exposé, l'expression « tête bêche » est entendu comme un positionnement de deux éléments semblables amenés à coopérer en étant orientés dans des directions opposées. Ainsi, lesdits éléments peuvent tout deux être orientés dans une direction facilitant la coopération.

Dans cette configuration, la flexion du raccord flexible est améliorée. En effet, la coopération « tête bêche » des éléments de liaison sécurise la liaison formée tout en procurant certains degrés de liberté entre les éléments de liaison. De plus, l'assemblage des éléments de liaison est facilité, ce qui facilite l'assemblage du raccord.

Dans certains modes de réalisation, le raccord flexible s'étend selon un axe, et les éléments de liaison coopérant via une portion disposée au voisinage de l'axe.

L'axe peut être rectiligne ou courbe. L'axe peut être compris comme la fibre neutre du raccord, par exemple le raccord étant considéré comme un volume géométrique plein. Le voisinage de l'axe peut comprendre le volume centré sur l'axe et présentant une section transverse à l'axe pouvant aller jusqu'à la moitié de la section transverse à l'axe du raccord.

Dans certains modes de réalisation, les éléments de liaison présentent des pattes de fixation, chaque patte de fixation présentant une portion plus épaisse que le reste de la patte, chaque portion plus épaisse étant fixée à une portion de tube rigide.

On comprend que la portion épaisse est épaisse comparativement au reste de la patte. On comprend que la portion épaisse forme la portion de fixation de la patte de fixation au raccord. Une telle portion épaisse renforce la patte et la fixation entre chaque élément de liaison et le tube rigide, ce qui augmente la résistance et la durabilité du raccord flexible, par exemple vis-à-vis des contraintes de cisaillement. Par exemple, la portion épaisse est épaisse comparativement au reste de la patte selon la direction circonférentielle. La direction circonférentielle correspond à la direction décrivant un anneau autour de la direction axiale. Cet épaississement est particulièrement pertinent dans le cadre d'un moteur fusée car il permet aux éléments de liaisons de soutenir les conditions particulièrement exigeantes des moteurs-fusés, en terme de pression et de température.

Dans certains modes de réalisation, le raccord flexible s'étend selon un axe, et chaque élément de liaison s'étend selon un plan comprenant l'axe, les plans de deux éléments de liaison étant perpendiculaires l'un par rapport à l'autre lorsqu'aucun fluide pressuré n'est présent dans le raccord flexible.

L'axe peut être rectiligne ou courbe. L'axe peut être compris comme la fibre neutre du raccord, par exemple le raccord étant considéré comme un volume géométrique plein. Dans cette configuration, la coopération entre les éléments de liaison est facilitée en permettant de limiter les interférences entre les deux éléments de liaison qui pourraient limiter les mouvements de flexion. Par exemple, cette disposition des éléments de liaison peu permettre de restreindre les contacts entre ces derniers à une zone au voisinage de l'axe, même lorsque le raccord fléchit.

Selon l'invention, l'une des formes de coopération de l'un des éléments de liaison comprend méplat tandis que l'autre forme de coopération prévue sur l'autre élément de liaison comprend une partie de butée, le méplat étant configuré pour entrer en butée contre la partie de butée.

Dans cette configuration, la coopération entre les éléments de liaison est améliorée et stabilisée. Par exemple, cette configuration peut améliorer la reprise des forces impliquées par les effets de fond. Les formes de coopération parallélépipédiques peuvent améliorer des reprises de moments de torsion sur le raccord flexible, jusqu'au blocage complet des mouvements de torsion du raccord flexible.

Un mode de réalisation concerne un moteur-fusée comprenant un raccord flexible selon l'un quelconque des modes de réalisation décrits dans le présent exposé.

Dans certains modes de réalisation, le raccord flexible est disposé dans une ligne cryogénique.

Un mode de réalisation concerne un engin spatial comprenant un moteur-fusée selon l'un quelconque des modes de réalisation décrits dans le présent exposé.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente un engin spatial comprenant un moteur-fusée.
[Fig. 2] La figure 2 représente une vue en coupe d'un raccord flexible du moteur-fusée de la figure 1, hors du cadre de l'invention.
[Fig. 3] La figure 3 représente une vue en coupe du raccord flexible de la figure 2 selon le plan de coupe III de la figure 2, hors du cadre de l'invention.
[Fig. 4] La figure 4 représente une vue en coupe selon le plan de coupe IV de la figure 2, perpendiculaire à l'axe du raccord, des éléments de liaison de la figure 2.
[Fig. 5] La figure 5 représente une vue détaillée des éléments de liaisons de la figure 3.
[Fig. 6] La figure 6 représente une première variante des éléments de liaison, selon une vue similaire à la figure 4, en conformité avec l'invention.
[Fig. 7] La figure 7 représente les éléments de liaison de la figure 6, représentés selon une vue similaire à la figure 5, en conformité avec l'invention.
[Fig. 8] La figure 8 représente une deuxième variante des éléments de liaison, selon une vue similaire à la figure 4, hors du cadre de l'invention.
[Fig. 9] La figure 9 représente les éléments de liaison de la figure 8, représentés selon une vue similaire à la figure 5, hors du cadre de l'invention.
[Fig. 10] La figure 10 représente une troisième variante des éléments de liaison, selon une vue similaire à la figure 4, hors du cadre de l'invention.
[Fig. 11] La figure 11 représente la troisième variante des éléments de liaison, hors du cadre de l'invention, avec un des éléments de liaison qui présente des arêtes arrondies.
[Fig. 12] La figure 12 représente une quatrième variante des éléments de liaison, selon une vue similaire à la figure 4, hors du cadre de l'invention.
[Fig. 13] La figure 13 représente la quatrième variante, hors du cadre de l'invention, des éléments de liaison avec un des éléments de liaison qui présente des arêtes arrondies.

### Description des figures

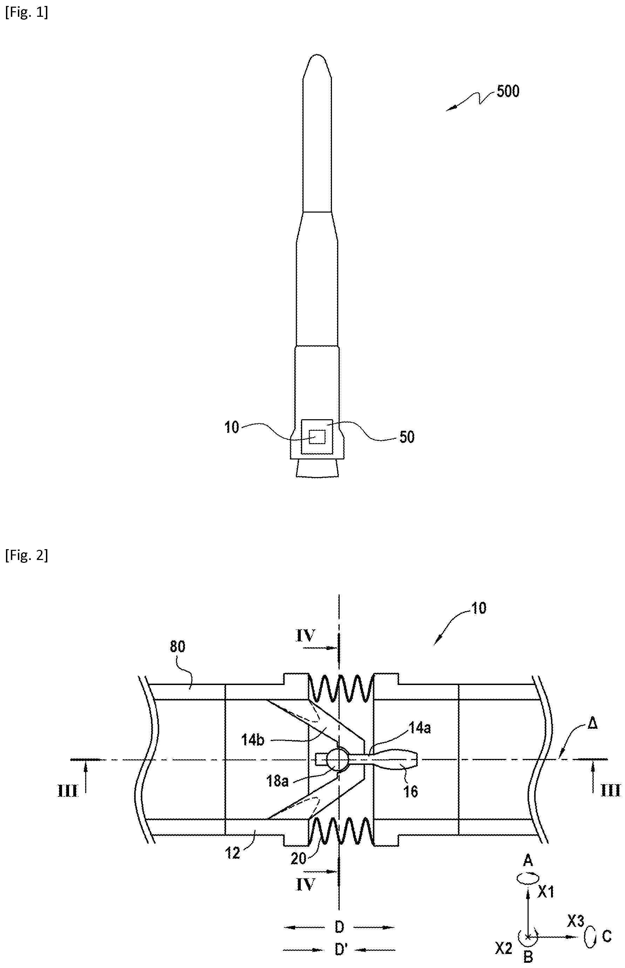

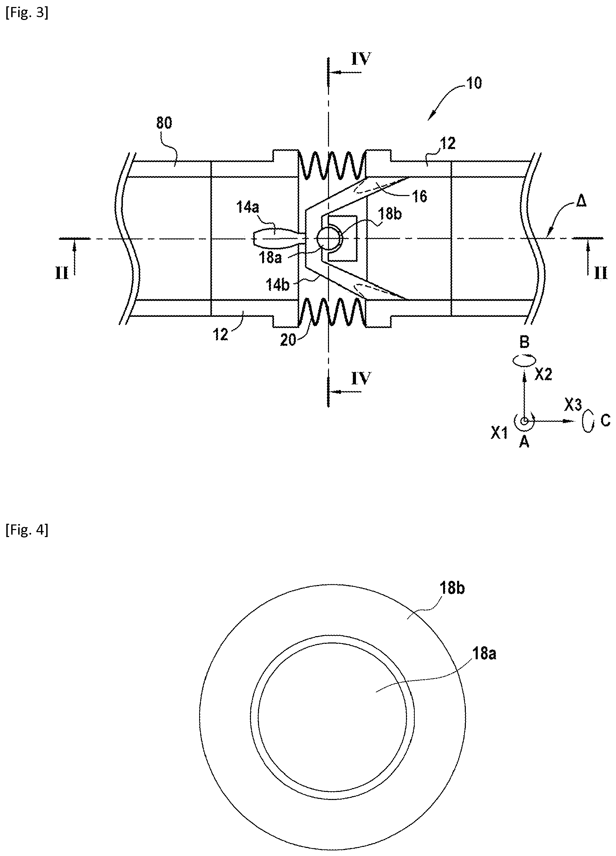

La figure 1 représente schématiquement un engin spatial 500 comprenant un moteur-fusée 50 comprenant un raccord flexible 10. Un raccord flexible 10 utile à la compréhension de l'invention est disposé au sein d'une ligne cryogénique 80 représentée partiellement sur les figures 2 et 3.

Les figures 2 et 3 représentent respectivement une vue en coupe d'un raccord flexible 10 selon deux plans perpendiculaires, la figure 2 correspondant au plan de coupe II de la figure 3 tandis que la figure 3 correspond au plan de coupe III de la figure 2. Les plans de coupe II et III sont des plans médians du raccord 10. Dans cet exemple, le raccord flexible 10 s'étend selon un axe longitudinal Δ. L'axe Δ est parallèle à une direction X3. Les directions X1 et X2 sont des directions perpendiculaires à la direction X3, et perpendiculaires entre elles. Dans cet exemple, les directions X3 et X1 définissent le plan II tandis que les directions X3 et X2 définissent le plan III.

Le raccord flexible 10 comprend deux portions de tube rigide 12 reliées par une portion de tube souple 20. La section transverse à l'axe Δ des portions de tube rigide 12 et de la portion de tube souple 20 est circulaire. D'autres formes de section sont envisageables. Chaque portion de tube rigide 12 comprend un élément de liaison 14a, 14b. Dans cet exemple, chaque élément de liaison 14a, 14b comprend des pattes de fixation 16 qui correspondent aux extrémités rattachés aux portions de tube rigide 12. Les pattes de fixation 16 présentent une portion plus épaisse que le reste de l'élément de liaison 14a, 14b, permettant ainsi une meilleure répartition des efforts au niveau de la jonction entre les pattes de fixation 16 et les portions 12. On comprend que la portion épaisse forme la portion de fixation de la patte de fixation 16 au raccord 10. Dans cet exemple, la portion épaisse est épaisse comparativement au reste de la patte de fixation 16 selon la direction circonférentielle. La direction circonférentielle correspond à la direction décrivant un anneau autour de la direction axiale.

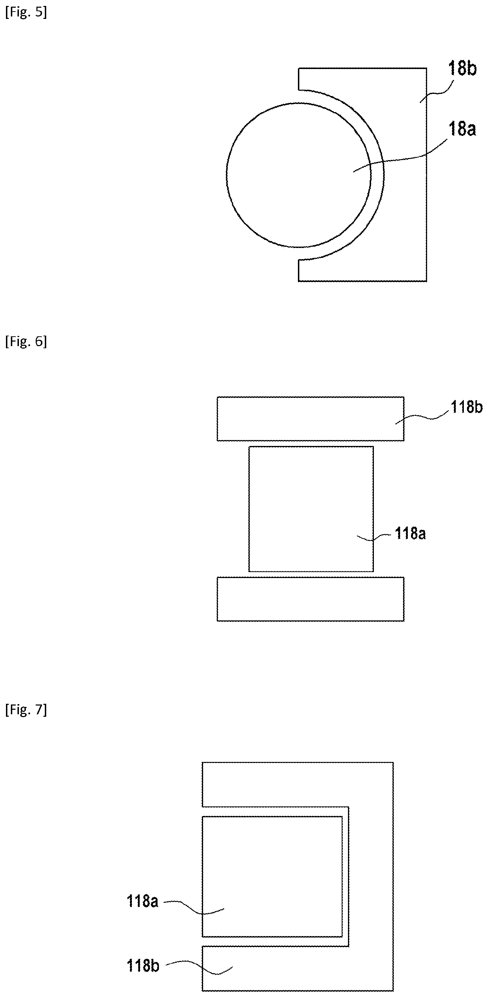

Dans cet exemple, les éléments de liaison 14a, 14b sont en forme de V et sont enchâssés tête bêche. Les éléments de liaison 14a, 14b sont configurés pour coopérer par complémentarité de forme. Dans l'exemple des figures 2 et 3, l'élément de liaison 14a comprend une partie convexe 18a et l'élément de liaison 14b comprend une partie concave 18b complémentaire (voir figures 4 et 5). Les parties convexe 18a et concave 18b s'emboitent au moins partiellement l'une avec l'autre et coopèrent comme un raccord de type mâle/femelle. Dans ce mode de réalisation, la partie convexe 18a est sphérique tandis que la partie concave 18b est semi-sphérique, de manière à recevoir la partir convexe.

Dans cet exemple, les éléments de liaisons 14a, 14b peuvent être en contact lorsque du fluide coule dans le raccord flexible 10. Cependant, lorsqu'aucun fluide ne coule dans la conduite, les éléments de liaisons 14a, 14b peuvent indifféremment être en contact ou non. Dans cet exemple, les éléments de liaison 14a, 14b limitent les déformations en élongation du raccord flexible 10 selon la flèche D, parallèle à la direction X3, en entrant en contact l'un contre l'autre. De telles déformations sont par exemple générées par des effets de fonds dû à la présence d'un fluide pressurisé dans la conduite 80. Les déformations en compression D', parallèle à la direction X3, sont autorisées par les éléments de liaison 14a, 14b.

Les parties convexe 18a et concave 18b étant dans cet exemple de forme complémentaires sphérique/ demi-sphérique, les éléments de liaisons 14a, 14b autorisent des rotations relatives entre eux. Dans cet exemple, les éléments de liaison 14a, 14b peuvent tourner selon un mouvement de rotation C autour de la direction X3, sur une amplitude d'une dizaine de degrés, et/ou selon un mouvement de rotation B autour de la direction X2, sur une amplitude supérieure à 5°, et/ou selon un mouvement de rotation A autour de la direction X1, sur une amplitude supérieure à 5°.

Les mouvements des éléments de liaison 14a, 14b disposés à l'intérieur du raccord flexible 10 peuvent voir leurs déplacements limités par la portion de tube souple 20. Par exemple, les portions de tubes rigides 12 peuvent tourner l'une par rapport à l'autre selon un mouvement de rotation C autour de la direction X3, sur une amplitude inférieure à 10°, et/ou selon un mouvement de rotation B autour de la direction X2, sur une amplitude comprise entre 5° et 10°, et/ou selon un mouvement de rotation A autour de la direction X1, sur une amplitude comprise 5° et 10°.

Une première variante de forme de parties convexe 118a et convexe 118b est représentée sur les figures 6 et 7. Les parties convexe 118a et concave 118b présentent respectivement des formes parallélépipédiques complémentaires. Par exemple la partie convexe 118a présente une forme de cube tandis que la partie concave 118b présente une forme de « U » configuré pour recevoir le cube et coopérer avec trois faces du cube. Ainsi, dans cet exemple, les éléments de liaison 14a, 14b équipés de parties convexe 118a et concave 118b peuvent tourner selon un mouvement de rotation relative B autour de la direction X2, sur une amplitude supérieure à 5° tandis que les rotations relatives A et C sont bloquées. En d'autres termes, cette configuration interdit la torsion du raccord flexible. Les mouvements d'élongation D / compression D' sont autorisés/limités de manière similaire à l'exemple représenté sur les figures 2 à 5.

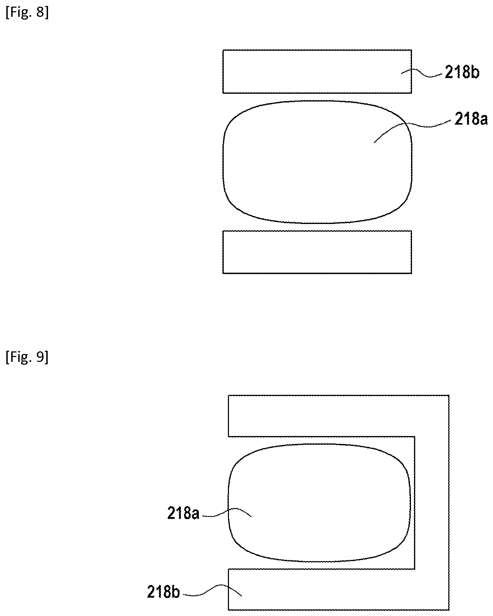

Une deuxième variante de forme de parties convexe 218a et concave 218b est représentée sur les figures 8 et 9. La partie convexe 218a présente une forme parallélépipédique dont les coins et les arêtes sont arrondis, tandis que la partie concave 218b est similaire à la partie concave 118b de la première variante. Ainsi, dans cet exemple, les éléments de liaison 14a, 14b équipés de parties convexe 218a et concave 218b peuvent tourner selon un mouvement de rotation C autour de la direction X3, sur une amplitude inférieure à 2°, et/ou selon un mouvement de rotation B autour de la direction X2, sur une amplitude supérieure à 5°, et/ou selon un mouvement de rotation A autour de la direction X1, sur une amplitude inférieure à 5°.Les mouvements d'élongation D / compression D' sont autorisés/limités de manière similaire à l'exemple représenté sur les figures 2 à 5.

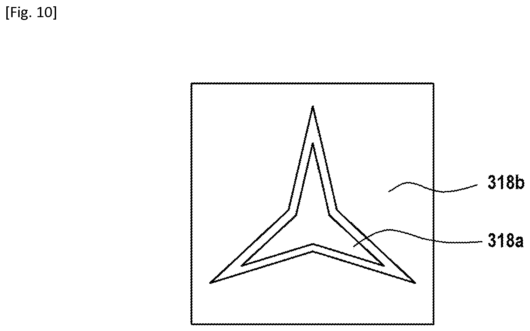

Une troisième variante de forme de parties convexe 318a et concave 318b est représentée sur la figure 10. La partie convexe 318a présente une forme en étoile à trois branches. La partie concave 318b présente une forme complémentaire à la forme de la partie convexe 318a. Un jeu peut être prévu entre la partie convexe 318a et la partie concave 318b. Ainsi, dans cet exemple, les éléments de liaison 14a, 14b équipés de parties convexe 318a et concave 318b peuvent tourner selon un mouvement de rotation C autour de la direction X3, sur une amplitude inférieure à 1 °, et/ou selon un mouvement de rotation B autour de la direction X2, sur une amplitude supérieure à 5° et inférieure à 10°, et/ou selon un mouvement de rotation A autour de la direction X1, sur une amplitude supérieure à 5° et inférieure à 10°. Les mouvements d'élongation D / compression D' sont autorisés/limités de manière similaire à l'exemple représenté sur les figures 2 à 5.

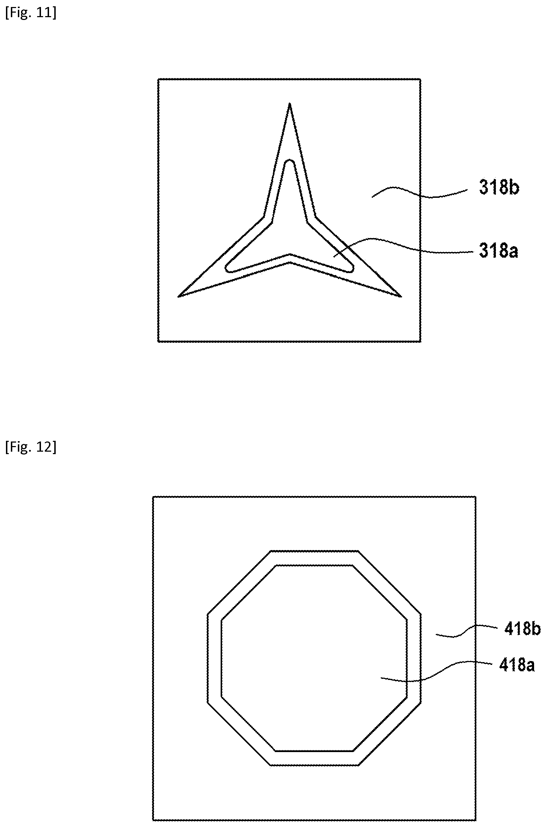

Comme cela est représenté sur la figure 11, les arêtes de la partie convexe 318a peuvent présenter des arrondis. Ces arrondis permettent de faciliter les rotations limitées des éléments de liaison 14a, 14b autour des directions X1 et X2 mentionnée ci-dessus. En d'autres termes, le faible jeu entre les parties convexe et concave 318a, 318b peut être obtenu d'une première façon, par le fait que les formes de ces parties sont homothétiques, c'est-à-dire qu'une épaisseur de jeu sensiblement constante est ménagée entre ces formes, sur tout leur pourtour. Le jeu peut être obtenu d'une deuxième façon, par le fait que, dans certaines zones, au moins, les formes des parties convexe et concave 318a, 318b diffèrent légèrement, en particulier en ce que des zones d'arêtes de l'une de ces formes correspondent, dans l'autre forme, à des zones arrondies ou que, dans les deux formes, les arêtes soient adoucies pour former des arrondis. Bien entendu, ces deux façons de réaliser le jeu peuvent être combinées en faisant en sorte que le jeu soit constant sur une ou plusieurs parties du pourtour des formes et que, sur d'autres parties, des arrondies en face d'arêtes ou des zones arrondies en face à face. Cette formation de jeu peut également s'appliquer à la deuxième variante.

Une quatrième variante de forme de parties convexe 418a et concave 418b est représentée sur la figure 12. La partie convexe 418a présente une forme en cylindre à base octogonale. La partie concave 418b présente une forme complémentaire à la forme de la partie convexe 418a. Un jeu peut être prévu entre la partie convexe 318a et la partie concave 318b. Ainsi, dans cet exemple, les éléments de liaison 14a, 14b équipés de parties convexe 418a et concave 418b peuvent tourner selon un mouvement de rotation C autour de la direction X3, sur une amplitude inférieure à 1 °, et/ou selon un mouvement de rotation B autour de la direction X2, sur une amplitude supérieure à 5° et inférieure à 10°, et/ou selon un mouvement de rotation A autour de la direction X1, sur une amplitude supérieure à 5° et inférieure à 10°. Les mouvements d'élongation D / compression D' sont autorisés/limités de manière similaire à l'exemple représenté sur les figures 2 à 5.

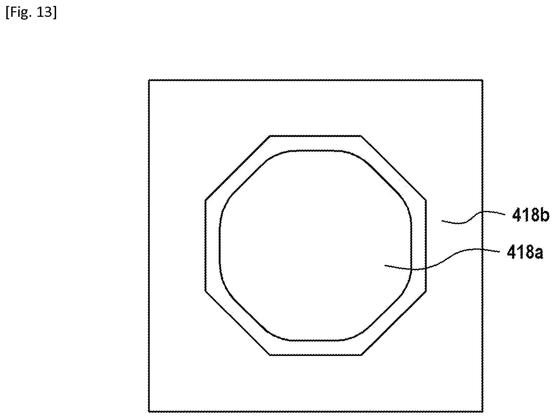

Comme cela est représenté sur la figure 13, les arêtes de la partie convexe 418a peuvent présenter des arrondis. Comme expliqué plus haut, cette configuration peut participer à la formation d'un jeu. Ces arrondis permettent de faciliter les rotations des éléments de liaison 14a, 14b autour des directions X1 et X2.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

Par exemple, un raccord flexible rectiligne a été décrit, mais la description ci-dessus s'applique également à un raccord flexible coudé. L'axe Δ serait alors courbe et pas rectiligne.

## Revendications

1. Raccord flexible (10) pour conduites de fluide reliant des composants d'un moteur-fusée, le raccord flexible (10) comprenant deux portions de tube rigide (12) reliées par une portion de tube souple (20), chaque portion de tube rigide (12) étant configurée pour être raccordée à l'une desdites conduites de fluide, chaque portion de tube rigide (12) comprenant un élément de liaison (14a,14b), l'élément de liaison (14a,14b) d'une portion de tube rigide (12) coopérant par complémentarité de forme avec l'élément de liaison (14a,14b) de l'autre portion de tube rigide (12) de manière à limiter les déformations du raccord flexible (10),
dans lequel les éléments de liaison (14a,14b) comprennent des formes de coopération (118a,118b), l'une des formes de coopération (118a) comprenant un méplat tandis que l'autre forme de coopération (118b) comprend une partie de butée, le méplat étant configuré pour entrer en butée contre la partie de butée, lesdites formes de coopération (118a,118b) étant parallélépipédiques et configurées pour s'emboîter géométriquement.

2. Raccord flexible (10) selon la revendication 1, dans lequel les éléments de liaison (14a,14b) coopèrent par l'intermédiaire d'un raccord du type mâle/femelle configuré pour s'emboîter géométriquement.

3. Raccord flexible (10) selon la revendication 1 ou 2, dans lequel les éléments de liaison (14a,14b) présentent une forme générale de « U » ou de « V » et sont enchâssés l'un dans l'autre tête-bêche.

4. Raccord flexible (10) selon l'une quelconque des revendications 1 à 3, s'étendant selon un axe (Δ), les éléments de liaison (14a,14b) coopérant via une portion (18a,18b) disposée au voisinage de l'axe.

5. Raccord flexible (10) selon l'une quelconque des revendications 1 à 4, dans lequel les éléments de liaison (14a,14b) présentent des pattes de fixation (16), chaque patte de fixation (16) présentant une portion plus épaisse que le reste de la patte (16), chaque portion plus épaisse étant fixée à une portion de tube rigide (12).

6. Raccord flexible (10) selon l'une quelconque des revendications 1 à 5, s'étendant selon un axe, dans lequel chaque élément de liaison s'étend selon un plan comprenant l'axe (Δ), les plans de deux éléments de liaison (14a, 14b) étant perpendiculaires l'un par rapport à l'autre lorsqu'aucun fluide pressuré n'est présent dans le raccord flexible.

7. Moteur-fusée comprenant un raccord flexible (10) selon l'une quelconque des revendications 1 à 6.

8. Moteur-fusée selon la revendication 7, dans lequel le raccord flexible (10) est disposé dans une ligne cryogénique.

9. Engin spatial comprenant un moteur-fusée selon la revendication 7 ou 8.

## Patentansprüche

1. Flexibler Verbinder (10) für Fluidleitungen, der Komponenten eines Raketentriebwerks verbindet, wobei der flexibler Verbinder (10) zwei starre Rohrabschnitte (12) umfasst, die durch einen flexiblen Rohrabschnitt (20) verbunden sind, wobei jeder starre Rohrabschnitt (12) ausgelegt ist, um mit einer der Fluidleitungen verbunden zu sein, wobei jeder starre Rohrabschnitt (12) ein Verbindungselement (14a, 14b) umfasst, wobei das Verbindungselement (14a, 14b) eines starren Rohrabschnitts (12) formschlüssig mit dem Verbindungselement (14a, 14b) des anderen starren Rohrabschnitts (12) derart zusammenwirkt, dass Verformungen des flexiblen Verbinders (10) begrenzt werden,
wobei die Verbindungselemente (14a, 14b) Kooperationsformen (118a, 118b) aufweisen, wobei eine der Kooperationsformen (118a) eine Abflachung aufweist, während die andere Kooperationsform (118b) einen Anschlagabschnitt aufweist, wobei die Abflachung ausgelegt ist, um an dem Anschlagabschnitt anzuschlagen, wobei die Kooperationsformen (118a, 118b) parallelepipedisch und zum geometrischen Einrasten ausgelegt sind.

2. Flexibler Verbinder (10) nach Anspruch 1, wobei die Verbindungselemente (14a, 14b) über einen Verbinder vom Typ männlich/weiblich zusammenwirken, der zum geometrischen Einrasten ausgelegt ist.

3. Flexibler Verbinder (10) nach Anspruch 1 oder 2, wobei die Verbindungselemente (14a, 14b) eine allgemeine U- oder V-Form aufweisen und gegensinnig ineinander verschachtelt sind.

4. Flexibler Verbinder (10) nach einem der Ansprüche 1 bis 3, der sich gemäß einer Achse (Δ) erstreckt, wobei die Verbindungselemente (14a, 14b) über einen in der Nähe der Achse angeordneten Abschnitt (18a, 18b) zusammenwirken.

5. Flexibler Verbinder (10) nach einem der Ansprüche 1 bis 4, wobei die Verbindungselemente (14a, 14b) Befestigungslaschen (16) aufweisen, wobei jede Befestigungslasche (16) einen dickeren Abschnitt als der Rest der Lasche (16) aufweist, wobei jeder dickere Abschnitt an einem starren Rohrabschnitt (12) befestigt ist.

6. Flexibler Verbinder (10) nach einem der Ansprüche 1 bis 5, der sich gemäß einer Achse erstreckt, wobei sich jedes Verbindungselement gemäß einer Ebene erstreckt, die die Achse (Δ) umfasst, wobei die Ebenen zweier Verbindungselemente (14a, 14b) senkrecht zueinanderstehen, wenn kein unter Druck stehendes Fluid im flexiblen Verbinder vorhanden ist.

7. Raketentriebwerk, das einen flexiblen Verbinder (10) nach einem der Ansprüche 1 bis 6 umfasst.

8. Raketentriebwerk nach Anspruch 7, wobei der flexible Verbinder (10) in einer Kryogenleitung angeordnet ist.

9. Raumfahrzeug, das ein Raketentriebwerk nach Anspruch 7 oder 8 umfasst.

## Claims

1. A flexible connector (10) for fluid lines connecting components of a rocket engine, the flexible connector (10) comprising two portions of rigid tube (12) connected by a portion of flexible tube (20), each portion of rigid tube (12) being configured to be connected to one of said fluid lines, each portion of rigid tube (12) comprising a connecting element (14a, 14b), the connecting element (14a, 14b) of a portion of rigid tube (12) cooperating by shape matching with the connecting element (14a, 14b) of the other portion of rigid tube (12) so as to limit the deformations of the flexible connector (10),
wherein the connecting elements (14a, 14b) comprise cooperating shapes (118a, 118b), one of the cooperating shapes (118a) comprising a flat while the other cooperating shape (118b) comprises an abutment portion, the flat being configured to abut against the abutment portion, said cooperating shapes (118a, 118b) being parallelepipedic and configured to interlock geometrically.

2. The flexible connector (10) according to claim 1, wherein the connecting elements (14a, 14b) cooperate by means of a connector of the male/female type configured to interlock geometrically.

3. The flexible connector (10) according to claim 1 or 2, wherein the connecting elements (14a, 14b) have a general "U" or "V" shape and are nested one inside the other head to tail.

4. The flexible connector (10) according to any one of claims 1 to 3, extending along an axis (Δ), the connecting elements (14a, 14b) cooperating via a portion (18a, 18b) arranged in the vicinity of the axis.

5. The flexible connector (10) according to any one of claims 1 to 4, wherein the connecting elements (14a, 14b) have fastening tabs (16), each fastening tab (16) presenting a portion thicker than the rest of the tab (16), each thicker portion being attached to a portion of rigid tube (12).

6. The flexible connector (10) according to any one of claims 1 to 5, extending along an axis, wherein each connecting element extends along a plane comprising the axis (Δ), the planes of two connecting elements (14a, 14b) being perpendicular to one another when no pressurized fluid is present in the flexible connector.

7. A rocket engine comprising a flexible connector (10) according to any one of claims 1 to 6.

8. The rocket engine according to claim 7, wherein the flexible connector (10) is disposed in a cryogenic line.

9. A spacecraft comprising a rocket engine according to claim 7 or 8.
